# EUROPÄISCHE PATENTSCHRIFT

(11) **EP 1 820 003 B1**
(45) Veröffentlichungstag und Bekanntmachung des Hinweises auf die Patenterteilung: **22.02.2012**
(21) Anmeldenummer: 05804564.2
(22) Anmeldetag: 17.11.2005
(51) Int. Cl.: G01N 19/02

(54) **VERFAHREN UND VORRICHTUNG ZUR UNTERSUCHUNG DER MATERIALEIGENSCHAFTEN MINDESTENS EINER VON ZWEI GEGENEINANDER BEWEGTER PROBEN**
PROCESS AND DEVICE FOR EXAMINING THE MATERIAL PROPERTIES OF AT LEAST ONE OF TWO SAMPLES MOVED RELATIVE TO ONE ANOTHER
PROCEDE ET DISPOSITIF PERMETTANT D'ANALYSER LES PROPRIETES DU MATERIAU D'AU MOINS UN DE DEUX ECHANTILLONS DEPLACES L'UN CONTRE L'AUTRE

(30) Priorität: 26.11.2004 AT 19932004
(43) Veröffentlichungstag der Anmeldung: 22.08.2007
(73) Patentinhaber: Wassermann, Johann, 1210 Wien (AT)
(72) Erfinder: Wassermann, Johann, 1210 Wien (AT)
(74) Vertreter: Babeluk, Michael
(86) Internationale Anmeldenummer: PCT/AT2005/000464
(87) Internationale Veröffentlichungsnummer: WO 2006/055994

(56) Entgegenhaltungen:
- DE-C1- 10 113 591
- FR-A- 2 655 148
- PATENT ABSTRACTS OF JAPAN Bd. 1997, Nr. 08, 29. August 1997 (1997-08-29) & JP 09 089693 A (DENSO CORP), 4. April 1997 (1997-04-04)

## Beschreibung

Die vorliegende Erfindung betrifft ein Verfahren gemäß Patentanspruch 1. Sie bezieht sich insbesondere auf das Gebiet der tribologischen Testmaschinen (z.B. Tribometer). Mit diesen Maschinen werden unter verschiedenen Bedingungen Reibpartner (Proben) mit einer vordefinierten Normalkraft aneinander gedrückt und die bei eingeprägten Relativbewegungen entstehenden Tangentialkräfte, die sogenannten Reibkräfte, gemessen. Die Reibpartner können dabei unterschiedlichste Formen aufweisen. Es können dabei direkt die Materialzusammensetzungen der Reibpartner, die Oberflächenbeschaffenheit und/oder zusätzlich eingebrachte Stoffe (Öle, Fette, Granulate, Pulver, etc.) Gegenstand der Untersuchung sein. Beispielsweise die Gleiteigenschaften von bestimmten Oberflächenbeschichtungen oder Werkstoffpaarungen, der Einfluss von speziellen Einlagerungen in porösen Materialien oder der Einfluss der Schmierwirkung von Fetten, Pasten, Schmierölen oder Dispersionen auf Abrieb, Bauteil-Funktionsdauer, Funktionszuverlässigkeit, etc.

Für allgemeine Untersuchungen werden die Reibpartner in einer Hin- und Herbewegung, einer so genannten Hubbewegung, auf einer Geraden relativ zueinander verschoben. Diese spezielle Bewegung ergibt sowohl Haft- als auch Gleitreibungsbereiche durch die Umkehrung der Bewegungsrichtung und durch Bereiche konstanter Relativgeschwindigkeit. Eine rein rotatorische Bewegung, wie bei Spezialausführungen, beschränkt die Untersuchungshedingungen bzw. die daraus ableitbaren Aussagen.

Die vorliegende Erfindung betrifft ein Verfahren zur Aufbringung dieser Normalkraft auf die Reibpartner bzw. Prüfkörper mit einer Hubbewegung.

Den meisten bekannten Lösungen der Normalkrafteinbringung für Prüfkörper mit einer Hubbewegung ist gemeinsam, dass sie auf die Probe-, Probenhalterung oder -führung mit mechanischen Bauteilen berührungsbehaftet erfolgt.

Beispielsweise wird über einen oder mehrere Hebel, Federn oder Stäbe ein Reibpartner, dessen Halterung oder Führung gegen den zweiten, mechanisch in der Versuchapparatur abgestützten oder angekoppelten Reibpartner gedrückt oder gezogen. Die Normalkraft wird durch einstellbare Mechanismen, wie Spiralfedern samt zugehöriger Verstelleinrichtung, (DD 126 542 A, EP 0 959 340 A2, US 6,094,967 A), Parallelfederelemente (z.B. DE 199 15 288 A1), Wälzkörperabstützung (z.B. FR 2 660 756 A1) auswechselbare Verformungskörper oder Belastungshebel mit Umlenkrolle und statischem Gewicht oder Ersatz des statischen Gewichts mittels elektromagnetischer Vorrichtung (z.B. WO 03/060487 A1) vordefiniert.

Analysen solcher berührungsbehafteten Mechanismen zieigen, dass mit steigenden Geschwindigkeiten der Relativbewegungen (Hübe) und/oder größeren Hüben die Messergebnisse durch deren Eigenschwingungen verfälscht werden. Sowohl die Reibkraft als auch die Richtungsumkehr der Relativbewegung nach dem jeweiligen Messhub stellen breitbandige Erregungen für den berührungsbehafteten Krafteinbringungsmechanismus dar, so dass ihre Eigenschwingungsformen angeregt werden. Einerseits kann dadurch nicht sichergestellt werden, dass die Normalkraft während der Relativbewegung, speziell bei der Hubumkehr, den vorgegebenen Wert beibehält. Andererseits werden durch die Schwingungen des berührungsbehafteten Normalkrafteinbringungsmechanismus auch andere Baugruppen, beispielsweise die Reibkraftmesseinrichtung oder die zweite Probenhalterung, zu Schwingungen angeregt. Dies führt zu einer Superposition der tatsächlichen Reibkräfte mit ungewünschten Störkräften. Im Extremfall kann sogar die gewünschte Relativbewegung zwischen den Reibpartner unzulässig beeinflusst werden. Bei versuchstechnisch interessanten Parametern, wie größeren Hüben, höheren Prüffrequenzen und kleineren Normalkräften kann dies nicht nur zu einer starken Verfälschung des Reibkraftverlaufs, sondern zu einem kompletten Verlust des zu erwartenden qualitativen Reibkraftverlaufs führen.

Eine weitere bekannte Lösung ist in der JP 09-089693 A offenbart. Bei dieser Lösung wird die Normalkraft mittels eines Motors berührungsbehaftet auf die durch einen Antrieb bewegte Probe eingebracht. Die feststehende Probe stützt sich auf ein magnetisch gelagertes System ab, das zur Messung der resultierenden Reibkräfte konzipiert ist. Wie aus dem Titel "Method and apparatus for measuring extremely small frictional force" hervorgeht, ist diese Apparatur für sehr kleine Reibkräfte konzipiert. Diese Konstruktion der unteren Probenhalterung weist eine sehr geringe Steifigkeit auf. Einerseits durch die Abstützung über das Magnetlagersystem, das zur Kraftmessung verwendet wird, andererseits durch die Auskragung und die Baulänge der Probenhalterung. Diese geringe Steifigkeit führt wiederum zu den bereits erwähnten Strukturschwingungen im Arbeitsfrequenzbereich, speziell bei größeren Kräften und/oder bei breitbandiger Erregung durch hohe Prüffrequenzen oder Richtungsumkehr der Bewegung. Sowohl die Versuchsbedingungen (gewünschte Relativbewegung) als auch die Qualität der Messergebnisse werden dadurch massiv verschlechtert.

Das Aneinanderdrücken wird durch sogenannte Normalkräfte (Kräfte, die senkrecht auf die Reibflächen wirken) erreicht. Deren Einbringung auf die Probenkörper und die Vorgabe der Größe dieser Normalkraft, sie ist ein wichtiger Parameter bei diesen Untersuchungen, wird durch verschiedene mechanische Ausführungen realisiert. Allen bekannten Lösungen ist gemeinsam, dass die Einbringung der Normalkraft zur Probe-, zur Probenhalterung oder -führung mit mechanischen Bauteilen berührungsbehaftet erfolgt.

Beispielsweise wird über einen oder mehrere Hebel, Federn oder Stäbe ein Reibpartner, dessen Halterung oder Führung gegen den zweiten, mechanisch in der Versuchapparatur abgestützten oder angekoppelten Reibpartner gedrückt oder gezogen. Die Normalkraft wird durch einstellbare Mechanismen, wie Spiralfedern samt zugehöriger Verstelleinrichtung (z.B. DD 126 542 A, EP 0 959 340 A2, US 6,094,967 A), Parallelfederelemente (z.B. DE 199 15 288 A1), Wälzkörperabstützung (z.B. FR 2 660 756 A1) auswechselbare Verformungskörper oder Belastungshebel mit Umlenkrolle und statischem Gewicht oder Ersatz des statischen Gewichts mittels elektromagnetischer Vorrichtung (z.B. WO 03/060487 A1) vordefiniert. Die gesuchte Tangentialkraft (Reibkraft) wird über direkte Kraftmessmethoden (z.B. Kraftsensor in einer Abstützung) oder indirekte Kraftmessmethoden (z.B. Weg- oder Dehnungsmessung) ermittelt. Anhand der gemessenen Tangentialkräfte werden die Materialeigenschaften bestimmt.

Eine weitere bekannte Lösung ist in der JP 09-089693 A offenbart. Bei dieser Lösung wird die Normalkraft durch eine Magnetanordnung aufgebracht und der Probenkörper wird in der Richtung der Reibkraft durch zwei übereinander angeordnete Radiallager gehalten, die als Magnetiager ausgebildet sind. Dabei ist eine sehr ungünstige Belastung der einzelnen Lager zu beobachten, so dass genaue Messergebnisse nicht erhalten werden können.

In der Druckschrift FR 2 655 148 A ist beispielsweise eine Prüfeinrichtung und Methode zur Bestimmung der Reibcharakteristik von sich berührenden Materialien bekannt geworden, bei dem die Normalkraft abgestützt auf die feststehende Probenhalterung über eine Klemme eingebracht wird.

Der Nachteil der Normalkrafteinbringung auf die feststehende Probe oder deren Halterung ist, dass entweder die Messung der Reibkraft an der beweglichen Probe oder Probenhalterung ausgeführt werden muss, was mit einem erheblichen messtechnischen Aufwand (bewegte Sensorik, zusätzliche Massen, Energieversorgung der beweglichen Messelektronik, etc.) verbunden wäre, oder man muss, auf Grund der erforderlichen höheren Steifigkeit der Konstruktion der feststehenden Probenhalterung, Einschränkungen hinsichtlich der Messempfindlichkeit und -genauigkeit bei einer Messung der Reibkraft akzeptieren.

Die DE 101 13 591 C betrifft eine spezielle tribologische Prüfeinrichtung zur Untersuchung des Verhaltens von Wellendichtsystemen bei Rotation. Entlang einer Wellenachse sind dabei zwei magnetische Radiallager (8, 9, 10) und ein Axiallager (12, 13) angeordnet, die eine gezielte Simulation dreidimensionaler Wellenschwingungen ermöglicht. Ziel dieser Versuchseinrichtung ist eine möglichst realistische Untersuchung von Dichtsystemen für rotierende Systeme hinsichtlich ihres Dichtungs-, Reib- und Verschleißverhaltens.

Eine Ausführung wie in DE 101 13 591 C ermöglicht lediglich Schwingungsamlituden im zehntel Millimeterbereich (Nachgiebigkeit der Dichtungen). Die Ursache ist, dass Magnetlager in dieser Ausführung nur geringe Luftspalte (typ. 0,5 mm bis 1 mm) ausweisen, um die erforderlichen Lagerkräfte F generieren zu können (F ist proportional 1/s² mit s als Luftspalt). Allgemeine Versuchsbedingungen erfordern Hübe im 10 mm bis 100 mm Bereich und darüber bei Normalkräften bis in den 10 kN-Bereich.

Diese genannten Anforderungen können mit einer Ausführung nach DE 101 13 591 C nicht erreicht werden.

Die Qualität einer solchen Prüfmaschine hängt daher im Wesentlichen davon ab, ob der bei einer Relativbewegung gemessene Reibkraftverlauf dem tatsächlichen, die beiden Reibpartner charakterisierenden Reibkraftverlauf entspricht.

Analysen solcher berührungsbehafteten Mechanismen zeigen, dass mit steigenden Geschwindigkeiten der Relativbewegungen (Hübe) und/oder größeren Hüben die Messergebnisse durch deren Eigenschwingungen verfälscht werden. Sowohl die Reibkraft als auch die Richtungsumkehr der Relativbewegung nach dem jeweiligen Messhub stellen breitbandige Erregungen für den berührungsbehafteten Krafteinbringungsmechanismus dar, so dass ihre Eigenschwingungsformen angeregt werden. Einerseits kann dadurch nicht sichergestellt werden, dass die Normalkraft während der Relativbewegung, speziell bei der Hubumkehr, den vorgegebenen Wert beibehält. Andererseits werden durch die Schwingungen des berührungsbehafteten Normalkrafteinbringungsmechanismus auch andere Baugruppen, beispielsweise die Reibkraftmesseinrichtung oder die zweite Probenhalterung, zu Schwingungen angeregt. Dies führt zu einer Superponierung der tatsächlichen Reibkräfte mit ungewünschten Störkräften. Im Extremfall kann sogar die gewünschte Relativbewegung zwischen den Reibpartnern unzulässig beeinflusst werden. Bei versuchstechnisch interessanten Parametern, wie größeren Hüben, höheren Prüffrequenzen und kleineren Normalkräften kann dies nicht nur zu einer starken Verfälschung des Reibkraftverlaufs, sondern zu einem kompletten Verlust des zu erwartenden qualitativen Reibkraftverlaufs führen.

Die Erfindung betrifft ein Verfahren zur Einbringung der Normalkraft- auf Prüfkörper oder Reibpartner gemäß Anspruch 1. Erfindungsgemäß erfolgt die Einbringung der Normalkraft entkoppelt von der Probenbewegung entweder mechanisch vollkommen berührungslos über ein oder mehrere Magnetfelder oder mit Hilfe mindestens eines Gas- oder Fluidstroms, auf mindestens einen Prüfkörper, dessen Halterung oder der Probenführung. Im Fall der magnetischen Einkopplung kann das Magnetfeld sowohl mit Hilfe eines Elektromagneten, eines Permanentmagneten oder deren Kombination als Hybridausführung erzeugt werden.

Weiters betrifft die Erfindung eine Vorrichtung zur Durdhführung des Verfahrens.

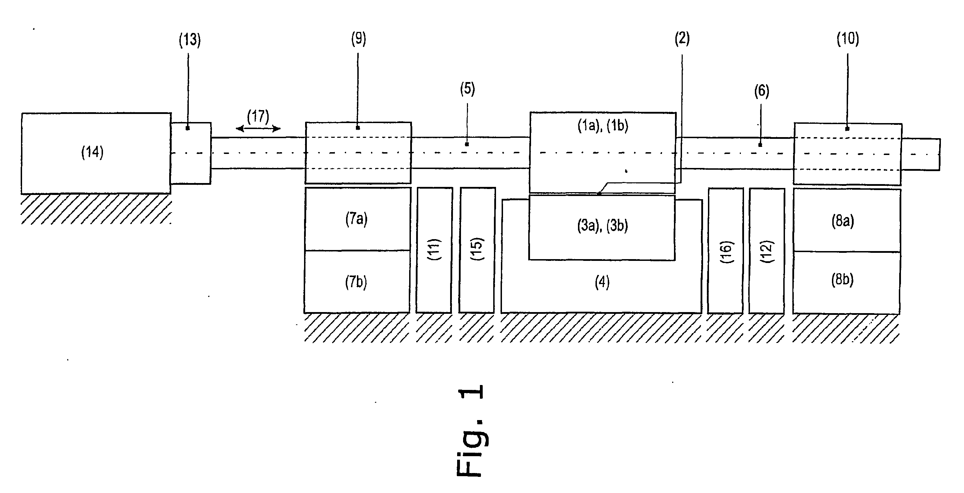

Fig. 1 zeigt schematisch eine erfindungsgemäße Vorrichtung in einer seitlichen Ansicht.

Fig. 1 zeigt eine Ausführungsvariante dieses Verfahrens mit Hilfe einer magnetischen Einkopplung der Normalkraft. Sie besteht aus zwei Elektromagneten 7a, 8a, die berührungslos über vorgebbare Spulenströme die gewünschte Normalkraft generieren und auf die beweglichen Probenführungen 5, 6 einbringen. Durch diese berührungsfreie Einbringung der Normalkraft ist gewährleistet, dass keinerlei Rückwirkung hinsichtlich von Eigenschwingungen durch die Normalkrafteinbringung entsteht. Zusätzlich ist es möglich, durch eine angepasste Länge der in den Probenführungen 5, 6 integrierten ferromagnetischen Teile (Anker), auch große Hübe 17 bei konstanter Normalkraft zu realisieren.

Grundsätzlich kann mit einem Elektromagnet eine gewünschte Kraft durch Vorgabe eines bestimmten Spulenstromes erreicht werden. Zur Vermeidung von Einflüssen auf die erforderliche Normalkraft, beispielsweise aus Konstruktionstoleranzen, die im Betrieb einen hubabhängigen Luftspalt bewirken oder Einflüsse von Temperaturänderungen auf charakteristische Kenndaten (Spulenwiderstand, relative Permeabilität, etc.), erfolgt eine Regelung von Spulenströme. Diese Regelung kann dabei als Kraft- und/oder Wegregelung ausgeführt sein. Im Falle der Kraftregelung wird die Istgröße der Normalkraft direkt mit einer Normalkraftmesseinrichtung 4 als Abstützkraft der Probenhalterung 3b und/oder indirekt als Abstützkräfte der Elektromagnete 7a; 8a mit Normalkraftmesseinrichtungen 7b; 8b gemessen.

Durch Vorgabe eines Sollwertes für die Normalkraft, kann die für die Untersuchung gewünschten Normalkraft statisch, nach einem bestimmten zeitlichen Verlauf oder innerhalb des Hubes auch variabel, mit der Bewegung synchronisiert oder stochastisch, vorgegeben werden. Grundsätzlich kann unter Ausnutzung einer Abstützkraft (beispielsweise nach Fig. 1, die radiale Lagerkraft des Tangentialantriebes) die Funktion auch durch die berührungslose Einbringung der Normalkraft an nur einer Position (ein Hubmagnet) erfüllt werden. Es können aber auch durch Erzielung höherer Normalkräfte oder Optimierung der berührungslosen Normalkrafteinbringung zwei oder mehrere Hubmagnete in einer Linie, in einer Ebene (Dreieck, Rechteck oder beliebigen Form) oder beliebig im Raum angeordnet werden.

Für die Führung der Probenhalterung 1b senkrecht zur Normalkraft und senkrecht zur tangentialen Bewegungseinrichtung 17 kann an einer Position oder an mehreren Positionen eine berührungslose Lagerung (z.B. 9 und/oder 10, magnetisch mit Elektro-, Permanent- oder Hybridmagneten oder über Luftlager) vorgesehen sein. Diese Lagerung und die Einbringung der Normalkraft kann auch in Form von einem oder mehreren zweiachsigen Magnetlagern ausgeführt sein.

Die Probenführung 5 wird über ein Koppelinterface 13 an den Tangentialantrieb 14 angekoppelt. Bei einer Ausführungsvariante nach Fig. 1 ist dieses Koppelinterface 13 möglichst biegeweich ausgeführt. Bei einer Ausführungsvariante mit Ausnützung der Abstützkraft am Tangentialantrieb 14 ist das Koppelinterface mit höherer Biegefestigkeit ausgeführt, so dass die erforderliche Abstützkraft gewährleistet ist.

Durch zusätzliche Abstützungen 15 und/oder 16 der Pröbenführungen 5 und/oder 6 oder in einer alternativen Ausführung der beweglichen Probe 1a oder deren Halterung 1b kann die Gewichtskraft eliminiert werden, so dass auch kleinste Normalkräfte vorgebbar sind. Die Abstützung 15 bzw. 16 kann als magnetische Lagerung (Elektro-, Permanent und/oder Hybridmagnete) als Luft- oder Fluidlagerung ausgeführt sein. Auch diese zusätzlichen Abstützungen können erfindungsgemäß alternativ mit Magnetlager realisiert werden.

### BEZUGSZEICHENLISTE

- 1a: bewegter Probenkörper
- 1b: bewegte Probenhalterung
- 2: Reibfläche zwischen den zu untersuchenden Materialien (Proben)
- 3a: feststehender Probenkörper
- 3b: feststehende Probenhalterung
- 4: Normalkraft- und/oder Tangentialkraftmesseinrichtung
- 5, 6: Probenführung mit ferromagnetischem Anker
- 7a, 8a: Elektromagnet
- 7b, 8b: Normalkraftmesseinrichtung
- 9, 10: Lagerung der Probenführung senkrecht zur Hubbewegung und zur Normal kraft
- 11, 12: Positionsmesseinrichtung
- 13: Koppelinterface
- 14: Tangentialantrieb
- 15, 16: Abstützung
- 17: Hub, Hubrichtung

## Patentansprüche

1. Verfahren zur Untersuchung der Materialeigenschaften mindestens einer von zwei gegeneinander bewegter Proben (1a, 3a), auf die eine Normalkraft aufgebracht wird, mit zwei gegeneinander bewegten Probenkörpern (1a, 3a), nämlich einem beweglichen Probenkörper (1a) und einem feststehenden Probenkörper (3a), auf die eine Normalkraft aufgebracht wird, mit Magnetlagerungen (9, 10), wobei die Normalkraft auf den beweglichen Probenkörper (1a) oder seine Halterung (1b) über mindestens ein Magnetfeld aufgebracht wird, **dadurch gekennzeichnet, dass** der bewegliche Probenkörper (1a) einer Hubbewegung entlang einer Reibfläche (2) unterworfen wird und dass die Normalkraft in Axialrichtung seitlich beiderseits des beweglichen Probenkörpers (1a) aufgebracht wird, und dass durch eine angepasste Länge der in der jeweiligen Probenführung (5, 6) integrierten ferromagnetischen Teile der Elektromagnete (7a, 8a) große Hübe (17) bei konstanter Normalkraft realisierbar sind.

2. Verfahren nach Anspruch 1, dadurch gekenntzeichnet, dass der bewegliche Probenkörper (1a) oder seine Halterung (1b) durch zwei seitlich neben dem Probenkörper (1a) angeordnete Magnetlager gehalten wird.

3. Verfahren nach Anspruch 1 oder 2, **dadurch gekennzeichnet, dass** die über den beweglichen Probenkörper (1a) auf den feststehenden Probenkörper (3a) oder dessen Halterung (3b) wirkende Normalkraft durch eine Kraftmesseinrichtung (4) und/oder durch die Kraftmesseinrichtungen (7b, 8b), basierend auf einer direkten oder indirekten Kraftmessmethode, gemessen wird.

4. Verfahren nach Anspruch 1 bis 3, **dadurch gekennzeichnet, dass** die durch die Reibung in der Reibfläche (2) hervorgerufene Tangentialkraft auf den feststehenden Probenkörper (3a) oder dessen Halterung (3b) durch eine Kraftmesseinrichtung (4), basierend auf einer direkten oder indirekten Kraftmessmethode, gemessen wird.

5. Verfahren nach einem der Ansprüche 1 bis 4, **dadurch gekennzeichnet, dass** einer Regelung der Normalkraft basierend auf einer Normalkraftmessung oder einer Positionsmessung erfolgt und dass vorzugsweise ein konstanter Sollwert für die Normalkraft vorgebbar ist.

6. Verfahren nach einem der Ansprüche 1 bis 5, **dadurch gekennzeichnet, dass** eine berührungslose Lagerung des Koppelinterfaces (13) oder der Probenführung senkrecht zur Wirkung der Normalkraft und der tangentialen Bewegungsrichtung vorgesehen ist.

7. Verfahren nach einem der Ansprüche 1 bis 6, **dadurch gekennzeichnet, dass** eine gegen die Gewichtskraft wirkende Abstützung des beweglichen Probenkörpers (1a), dessen Halterung (1b) oder mindestens einer Probenführung vorgesehen ist.

8. Vorrichtung zur Untersuchung der Materialeigenschaften mindestens einer von zwei gegeneinander bewegter Proben, auf die eine Normalkraft aufgebracht wird, mit zwei gegeneinander beweglichen Probenkörpern (1a, 3a), die durch Magnetlagerungen (9, 10) gehalten sind, und mit einer Einrichtung zum Aufrichten bzw. Einstellen einer Normalkraft, **dadurch gekennzeichnet, dass** die Magnetlagerungen (9, 10) seitlich, in Axialrichtung beiderseits neben dem beweglichen Probenkörper (1a) angeordnet sind und dass der bewegliche Probenkörper (1a) durch einen Tangentialantrieb (14) in einer Hubbewegung entlang einer Reibfläche (2) verschiebbar ist und dass weiters die in der Probenführung (5, 6) integrierten ferromagnetischen Teile eine angepasste Länge aufweisen, um große Hübe (17) bei konstanter Normalkraft zu realisieren.

9. Vorrichtung nach Anspruch 8, **dadurch gekennzeichnet, dass** die Magnetlagerungen gleichzeitig als Axialführung und als Einrichtung zur Aufbringung der Normalkraft ausgebildet sind.

10. Vorrichtung nach einem der Ansprüche 8 oder 9, **dadurch gekennzeichnet, dass** die Einrichtung zum Aufbringen bzw. Einstellen einer Normalkraft einen Permanentmagnet aufweist.

11. Vorrichtung nach einem der Ansprüche 8 bis 10, **dadurch gekennzeichnet, dass** die Einrichtung zum Aufbringen bzw. Einstellen einer Normalkraft einen Elektromagnet aufweist.

## Claims

1. Method of determining the material properties of at least one of two material samples (1a, 3a), which are moved against each other and on which is applied a normal force, where two sample bodies (1a, 3a) on magnetic bearings (9, 10), one stationary (3a) and one moving (1a), are subjected to a normal force, and where the normal force is applied on the movable sample body (1a) or its holder (1b) via at least one magnetic field, **characterised in that** the movable sample body (1a) is subjected to a reciprocating motion along a friction surface (2) and that the normal force is applied laterally in axial direction on both sides of the movable sample body (1a), and that by choosing a suitable length for the ferromagnetic parts of the electromagnets (7a, 8a) integrated in the sample guiding means (5, 6) large stroke lengths (17) can be achieved at constant normal force.

2. Method according to claim 1, **characterised in that** the movable sample body (1a) or its holder (1b) is held by two magnetic bearings positioned laterally beside the sample body (1a).

3. Method according to claim 1 or 2, **characterised in that** the normal force acting via the movable sample body (1a) on the stationary sample body (3a) or its holder (3b) is measured by a force measuring device (4) and/or force measuring devices (7b, 8b) based on a direct or indirect force measuring method.

4. Method according to any of claims 1 to 3, **characterised in that** the tangential force acting through friction in the friction surface (2) on the stationary sample body (3a) or its holder (3b) is measured by a force measuring device (4) based on a direct or indirect force measuring method.

5. Method according to any of claims 1 to 4, **characterised in that** the normal force is controlled by way of force measurement or position measurement and that preferably a constant target value of the normal force can be prescribed.

6. Method according to any of claims 1 to 5, **characterised in that** the coupling interface (13) or the sample guiding means are held in contact-free bearings at a right angle to the action of the normal force and the tangential direction of motion.

7. Method according to any of claims 1 to 6, **characterised in that** support against its weight force is provided for the movable sample body (1a), its holder (1b) or at least one sample guiding means.

8. Device for determining the material properties of at least one of two material samples (1a, 3a), which are movable against each other and are held on magnetic bearings (9, 10) and on which is applied a normal force, comprising a means for generating and adjusting the normal force, **characterised in that** the magnetic bearings (9, 10) are positioned laterally in axial direction on both sides of the movable sample body (1a) and that the movable sample body (1a) can be shifted in a reciprocating motion along a friction surface (2) by means of a tangential drive (14), and further that a suitable length is chosen for the ferromagnetic parts integrated in the sample guiding means (5, 6), such that large stroke lengths (17) can be achieved at constant normal force.

9. Device according to claim 8, **characterised in that** the magnetic bearings are designed such that they act as axial guides and as a means for applying the normal force at the same time.

10. Device according to claim 8 or 9, **characterised in that** the means for applying and adjusting a normal force is provided with a permanent magnet.

11. Device according to any of claims 8 to 10, **characterised in that** the means for applying and adjusting a normal force is provided with an electromagnet.

## Revendications

1. Procédé d'analyse des propriétés du matériau d'au moins deux éprouvettes (1a, 3a) déplacées l'une par rapport à l'autre, et auxquelles on applique une force normale, avec deux corps d'éprouvette (1a, 3a) déplacés l'un par rapport à l'autre à savoir un corps d'éprouvette mobile (1a) et un corps d'éprouvette fixe (3a) auxquels on applique une force normale avec des paliers magnétiques (9, 10),
* la force normale étant appliquée sur le corps d'éprouvette mobile (1a) ou son support (1b) par au moins un champ magnétique,
**caractérisé en ce que**
le corps d'éprouvette mobile (1a) est soumis à une course le long d'une surface de frottement (2), et
- la force normale est appliquée dans la direction axiale latéralement des deux côtés du corps d'éprouvette mobile (1a), et
- une longueur adaptée des parties ferromagnétiques des électroaimants (7a, 8a) intégrée dans le guide d'éprouvette (5, 6) respectif permettant de réaliser des courses importantes (17) avec une force normale constante.

2. Procédé selon la revendication 1,
**caractérisé en ce que**
le corps d'éprouvette mobile (1a) ou son support (1b) sont tenus par deux paliers magnétiques installés latéralement à côté du corps d'éprouvette (1a).

3. Procédé selon la revendication 1 ou 2,
**caractérisé en ce que**
la force normale agissant par l'intermédiaire du corps d'éprouvette mobile (1a) sur le corps d'éprouvette fixe (3a) ou son support (3b) est mesurée par une installation de mesure de force (4) et/ou par des installations de mesure de force (7b, 8b) appliquant un procédé de mesure directe ou indirecte de force.

4. Procédé selon les revendications 1 à 3,
**caractérisé en ce qu'**
on mesure la force tangentielle engendrée par le frottement dans la surface de frottement (2), sur le corps d'éprouvette fixe (3a) ou son support (3b) par une installation de mesure de force (4) appliquant un procédé de mesure directe ou indirecte de force.

5. Procédé selon l'une des revendications 1 à 4,
**caractérisé en ce qu'**
- on effectue une régulation de la force normale en se fondant sur une mesure de force normale ou une mesure de position, et
- on prédéfini de préférence une valeur de consigne constante pour la force normale.

6. Procédé selon l'une des revendications 1 à 5,
**caractérisé en ce qu'**
il est prévu un palier sans contact pour l'interface de couplage (13) ou du guidage d'éprouvette perpendiculairement à la ligne d'action de la force normale ou de la direction tangentielle de mouvement.

7. Procédé selon l'une des revendications 1 à 6,
**caractérisé en ce qu'**
il est prévu un appui du corps d'éprouvette mobile (1a) agissant contre le poids muni d'un support (1b) ou au moins d'un guide d'éprouvette.

8. Dispositif d'analyse des propriétés du matériau d'au moins l'une des deux éprouvettes mobiles l'une par rapport à l'autre et sur laquelle on exerce une force normale, à l'aide de deux corps d'éprouvette mobiles (1a, 3a) l'un par rapport à l'autre et tenus par des paliers magnétiques (9, 10),
dispositif **caractérisé en ce que**
- les paliers magnétiques (9, 10) sont installés latéralement dans la direction axiale de part et d'autre à côté du corps d'éprouvette mobile (1a), et
- le corps d'éprouvette mobile (1a) est coulissé par un entraînement tangentiel (14) suivant une course le long d'une surface de frottement (2), et
- en outre les parties ferromagnétiques intégrées dans le guide d'éprouvette (5, 6) ont une longueur adaptée pour réaliser une course importante (17) avec une force normale constante.

9. Dispositif selon la revendication 8,
**caractérisé en ce que**
les paliers magnétiques sont réalisés en même temps comme guide axial et comme installation pour appliquer la force normale.

10. Dispositif selon l'une des revendications 8 ou 9,
**caractérisé en ce que**
pour appliquer ou régler une force normale l'installation comporte un aimant permanent.

11. Dispositif selon l'une des revendications 8 à 10,
**caractérisé en ce que**
pour appliquer ou régler une force normale l'installation comporte un électro-aimant.
